# EUROPEAN PATENT APPLICATION

(11) **EP 2 783 786 A1**
(43) Date of publication of application: **01.10.2014**
(21) Application number: 14162154.0
(22) Date of filing: 27.03.2014
(51) Int. Cl.: B23K 26/06, C03B 33/04, C03B 33/09

(54) **METHOD AND MACHINE FOR CUTTING A GLASS SHEET**

(30) Priority: 27.03.2013 IT TO20130252; 15.01.2014 IT TO20140022
(71) Applicant: Bottero S.p.A., Cuneo (IT)
(72) Inventor: Ghinamo, Leonardo, 12100 Cuneo (IT); Olocco, Guido, 12012 Boves (IT); Ostorero, Marcello, 12010 Vignolo (IT); Ferrari, Simone, 12100 Cuneo (IT); Viglietti, Davide, 12080 Pianfei (IT)
(74) Representative: Boggio, Luigi

(57) **Abstract**

A method and machine (1) for cutting a sheet glass (2), according to which the sheet glass (2) is broken along a predetermined cutting line (3) by directing a thermal beam (19) emitted by an elongated filament of an incandescent light bulb onto the sheet (2) and by concentrating and distributing the thermal beam on a rectilinear focusing line (24), which may be either parallel to the sheet (2) or not and substantially either coinciding with or parallel to a tangent to the predetermined cutting line (3).

## Description

The present invention relates to a method and a machine for cutting a glass sheet.

For cutting a glass sheet it is known to use a cutting machine, which comprises a scoring member adapted to make an scoring line on an extended surface of the sheet and a breaking unit adapted to bend the sheet and cause it to break along such an scoring line.

The correct bending of the sheet, particularly for thick sheets, requires the use of breaking assemblies with a high stability under load and an accurate control of the breaking assemblies themselves according to variations of the type and thickness of the sheet to be cut. Similarly, the correct bending of the sheet is difficult in the case of thin sheets in which an inaccurate bending or a concentration of forces causes the spontaneous breakage of the sheet along breakage lines which are normally different from those expected.

For the cutting of such thin sheets, it is further known to use cutting machines in which, following the scoring, the portion of the sheet in the neighborhood of the scoring line is gradually heated by means of a naked flame, generally an oxyacetylene flame, and thus immediately struck with a refrigerating liquid, instead of bending the sheet. The sudden cooling of the surface of the sheet in direct contact with the refrigerating liquid generates stresses which cause the breakage of the sheet along the scoring line, the localized weakening caused by the scoring line itself prevailing. However, such a breakage method, which is not applied to thick sheets, is also seldom used for thin sheets, firstly because it is extremely difficult to accurately dose both the supplied instantaneous heat and the removed heat, i.e. to maintain the thermal gradient unchanged along the entire scoring line due to the diffusion of heat through the glass sheet without producing structural variations or chipping in the pieces made.

For the reasons illustrated above, the flame breakage method cannot be used for breaking laminated glass sheets, i.e. of the type comprising two side glass sheets with an interposed layer of thermoplastic material.

In addition to this, the liquids used foul the sheet which must then be washed and require the use of devices for draining and retrieving the refrigerating liquid, which inevitably contains pieces of glass. Part of the fed liquid inevitably evaporates and thus dedicated aspirating devices must be provided in the working environments.

Furthermore, such a breakage method is not applied to the cutting of so-called "coated" glass sheets, in at least one of the extended surfaces is coated with metallic powders or oxides, commonly known as "low-E", which would be inevitably removed or, in all cases, damaged by the refrigerating liquids and in all cases by any fluid, including gaseous ones.

It is the object of the present invention to provide a machine for cutting a glass sheet, which allows to solve the problems illustrated above in simple and cost-effective manner and, in particular, allows, with respect to the known solutions, to obtain a "dry" cut, i.e. totally free from heating or refrigerating liquids or gases, and without using flames or heating liquids of the sheet to be cut.

According to the present invention a machine for cutting a glass sheet as disclosed in claim 1 is provided. Preferably, in the machine defined above, said concentration means comprise focusing means, different and distinct from said reflecting means, for deflecting at least part of said thermal beam, either direct or reflected by said reflecting means, and focusing it along a further focusing line, either coinciding with or distinct from said focusing line.

The present invention further relates to a method for cutting a glass sheet.
According to the present invention, a method for cutting a glass sheet is provided as disclosed in claim 9.
Preferably, in the method defined above, said thermal gradient is generated by varying the distance of said focusing line from said extended or peripheral surfaces of said glass sheet or by varying the position of said focusing line within said glass sheet.
Furthermore, the concentration of said thermal beam is preferably obtained by using reflecting means and by deflecting, by means of said reflecting means, said thermal beam emitted on said focusing line or by using focusing means, different and distinct from said reflecting means, and deflecting at least part of said thermal beam, either direct or reflected by said reflecting means, and focusing it on a line, either coinciding with or distinct from said focusing line. Finally, the breakage of said sheet is conveniently carried out by applying mechanical traction/compression actions either parallel or transverse to said resting plane onto said sheet.

The invention will now be described with reference to the accompanying drawings which illustrate non-limitative embodiments thereof, in which:
figure 1 shows a machine for cutting a glass sheet according to the dictates of the present invention, diagrammatically and substantially in blocks;
figure 2 shows a section view, on a highly magnified scale, of a first preferred embodiment of a detail in figure 1;
figure 3 is a figure similar to figure 2 and shows a variant of a detail in figure 2;
figure 4 is a figure similar to figure 2 and shows a second preferred embodiment of a detail in figure 1;
figure 5 is a figure similar to figure 4 and shows a variant of a detail in figure 4;
figure 6 shows a section view, on a highly magnified scale, of a third preferred embodiment of a detail in figure 1;
figure 7 shows a section view, on a highly magnified scale, of a fourth preferred embodiment of a detail in figure 1; and
figures 8 and 9 show the temperature variations in a monolithic glass sheet and in a laminated glass sheet cut according to the dictates of the present invention, respectively.

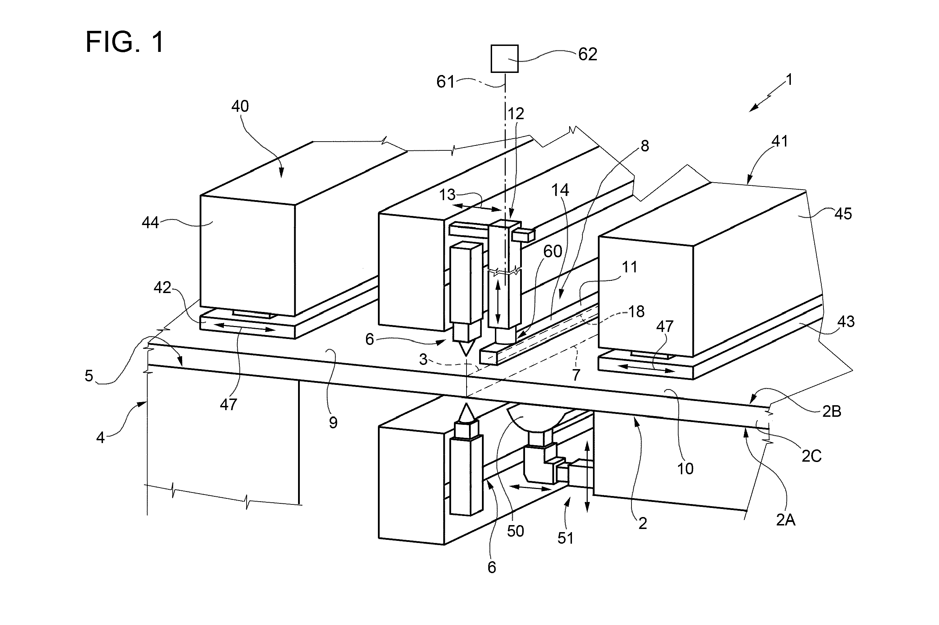

In figure 1, reference numeral 1 indicates as a whole a machine for cutting a monolithic or laminated glass sheet 2 along a predetermined rectilinear cutting line 3 extending along the opposite extended surfaces 2A and 2B of the sheet 2.

The machine 1 comprises a supporting frame 4 defining a resting plane 5 for the sheet 2 and a double bridge scoring device 6 of the sheet (known in itself and not described in detail), to make an scoring line 7 coinciding with the cutting line 3 either on surface 2A or on both surfaces 2A,2B of the monolithic glass sheet or on each of the surfaces 2A and 2B, in the case of laminated glass sheets.

The machine 1 further comprises a thermal cutting assembly 8 for heating a zone of the sheet 2 straddling the cutting line 3 and for breaking the sheet 2 itself along the scoring line 7 forming two pieces of sheet 9 and 10.

Again with reference to figure 1, the thermal assembly 8 comprises an electric light bulb 11, which conveniently extends over the resting plane 5 in position facing the surface 2B of the sheet 2 at the cutting line 3 in use.

Alternatively, according to a variant (not shown), the light bulb 11 extends under the resting plane 5 and in position facing the surface 2A, in use.

In both cases, the length of the light bulb 11 is such to extend from one part of the resting plane 5 to the other so as to protrude or project beyond a smaller peripheral surface 2C of the sheet 2 orthogonal to the surfaces 2A and 2B regardless of the width of the sheet.

Alternatively, according to a different embodiment, the width of the light bulb 11 is smaller than the width of the resting plane 5 and, for example, 20 millimeters larger. Conveniently, light bulbs of length varying from 50 to 300 millimeters are used. In these cases, multiple light bulbs 11 are arranged aligned to cover the entire width of the resting plane 5 and/or to protrude beyond the plane 5 itself.

In both cases, each light bulb 11 further comprises a casing 14 thereof and is coupled to the frame 4 by means of a motorized actuating assembly 12 for translating, transversely to the cutting line 3, in a direction 13 parallel to the resting plane 5 from and towards an operative heating position, in which it extends either at or in position facing the cutting line 3 and for being displaced from and towards the resting plane 5 in a vertical direction 15 orthogonal to the resting plane 5 itself.

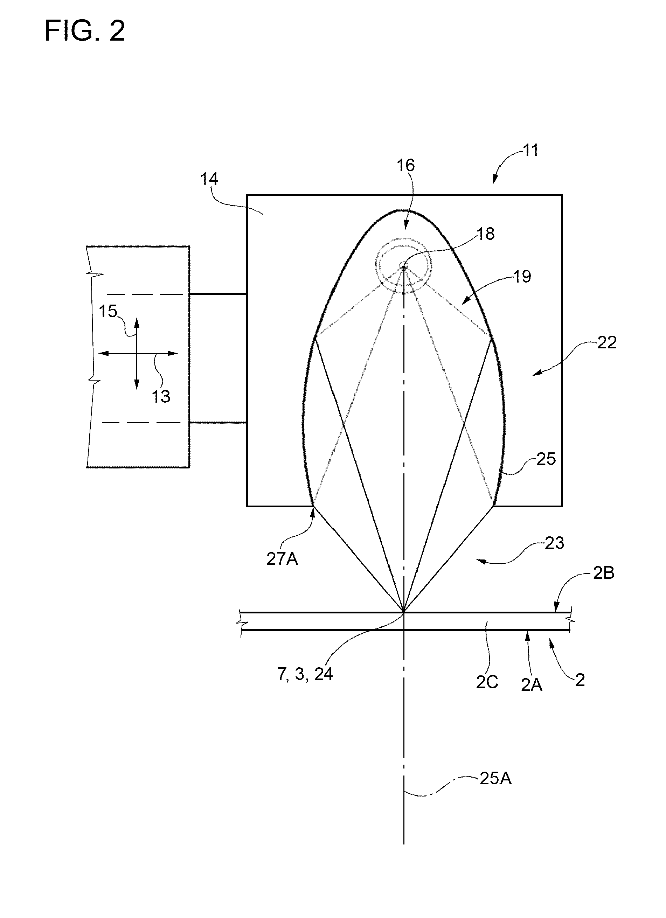

With reference to figure 2, the light bulb 11 is conveniently of the incandescent type and comprises a tubular bulb 16 permeable to the heating rays and a substantially rectilinear incandescent filament 18 extending for the entire length of the light bulb 11. In the particular example described, the filament 18 is housed in the bulb 16, either extends parallel to the resting plane 5 or forms an angle different from zero with the resting plane 5 itself and the sheet 2, and is adapted to emit a diverging, cylindrical thermal beam 19 in use. Preferably, the thermal beam 19 has a continuous spectrum and a wavelength varying from 0.3 to 3 micron. The thermal assembly 8 further comprises a device 22 for concentrating the thermal beam 19 emitted by the filament 18 and generating a concentrated and converging thermal beam 23 either distributed on a rectilinear elongated focusing line 24 parallel to the plane 5 and to the sheet 2 or forming an angle different from zero, for example of 10° degrees, with the plane 5. The position of such a focusing line 24 is adjusted with respect to the provided cutting line 3 and to the resting plane 5 as a consequence by adjusting the position of the light bulb 11 and of the respective focusing device 22 in directions 13 and 15. Thus, such a focusing line 24 may be arranged either in an operating position perfectly coinciding with the cutting line 3, either outside or inside the sheet 2, or in position substantially either tangent to the cutting line or parallel to the cutting line 3 itself, as will be described and illustrated below.

In general, the position of the light bulb 11 and of the respective concentration device 22 and, consequently, that of the focusing line 24 with respect to the resting plane 5 and with respect to the sheet 2 in direction 15 is varied as a function of type of sheet 2 and, conveniently, according to the variation of the thickness of the sheet 2 itself and as a function of the power of the light bulb 11 used.

The position of the focusing line 24 in direction 13 is instead varied to vary the temperature between two pieces of sheet 9 and 10 and as a function of the extension of the pieces of sheet 9 and 10 and, in general, to vary the temperature distribution on the sheet in the neighborhood of the cutting line 3. Conveniently, with reference to figure 2, the focusing line 24 lays on the surface 2B of the sheet and practically coincides with the provided cutting line 3. In such a situation, the scoring line 7 and cutting line 3, the filament 18 and the focusing line 24 lay on a common symmetry plane 25A of the output beam 23 orthogonal to the surfaces 2A,2B and to the resting plane 5.

Alternatively, the focusing line 24 is arranged outside the sheet 2 and position near the surface 2B itself. The power of the light bulb 11 being equal, the distance of the focusing line 24 from the sheet 2 is varied so as to vary the maximum temperature to which the sheet 2 is subjected in the neighborhood 3 of the cutting line 3 and thus the thermal gradient between the surfaces 2A and 2B of the sheet 2 itself.

In all cases, the concentration device 22 of the thermal beam 19 forms at least one elongated thermal blade or thermal knife which either ends with or is delimited by the mentioned elongated focusing line 24 and, in specific described case, extends for the entire width of the sheet 2 to be cut, i.e. for the entire length of the line 3, so that it simultaneously heats the entire elongated portion of the sheet 2 crossed by the cutting line 3 and straddling the scoring line, if present, when it is parallel to the plane 5.

In this manner, the mentioned elongated portion of the sheet is uniformly heated along its entire length, and is thus both thermally and mechanically uniform, regardless of the heating temperature reached. Higher temperatures can be obtained at the ends of the cutting line 3 with respect to the center by making a thermal blade which either protrudes or projects beyond the sides of the glass sheet 2, as will be described in greater detail below. Again with reference to figure 2, the concentration device 22 conveniently comprises a concave reflecting body 25, preferably with an elliptical or parabolic section, which is symmetric with respect to the plane 25A. Alternatively, according to a variant, the reflecting body 25 is not symmetric with respect to the plane 25, thus generating an asymmetric output beam. Conveniently, the reflecting body 25 houses the filament 18 in a focus of the reflecting body 25 itself.

The reflecting body 25 has an outlet opening 27A and, conveniently, a geometry such as to intercept and deflect the maximum amount of the thermal beam 19 emitted by the filament 18 on the mentioned focusing line 24. In the aforesaid conditions, the temperature of the sheet 2 reaches a peak or its maximum value on the surface 2B and on the cutting line and gradually decreases towards the surface 2A.

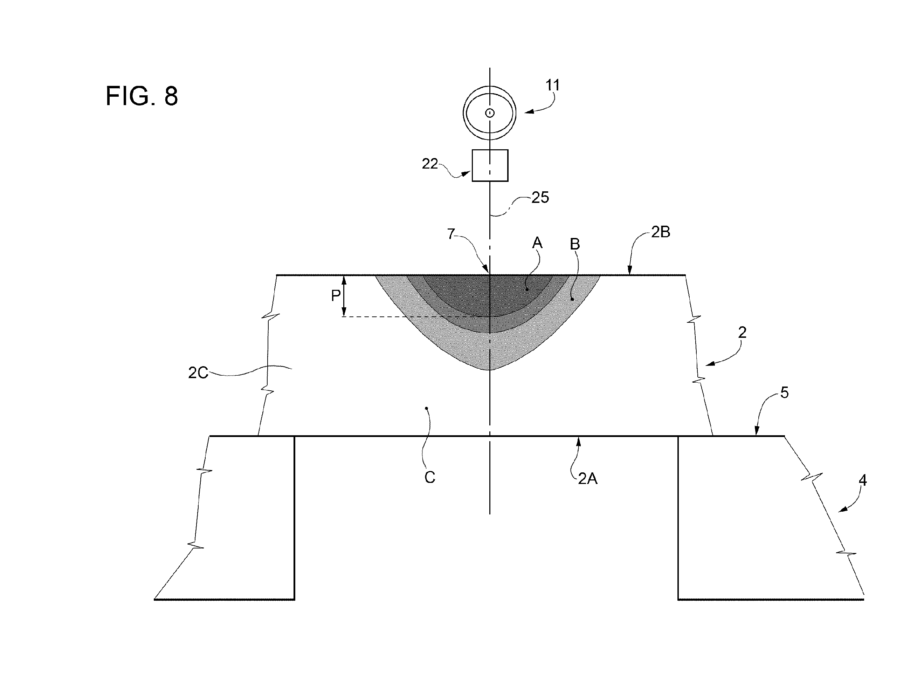

Figure 8 shows the temperature variation in a monolithic glass sheet which is nineteen millimeters thick using a light bulb 11 having a power linear density of approximately 3 W/mm. As shown in such a figure 8, the temperature assumes a maximum, and approximately constant value in a semicircular zone A near the surface 2B and for a depth P of 5 millimeters. The measured value of such a maximum temperature is equal to approximately 120°C. The temperature decreases and then reaches a temperature of approximately 90°C in the center of the sheet in a semi-annular zone B and a temperature of approximately 70°C in a zone near the surface 2A.

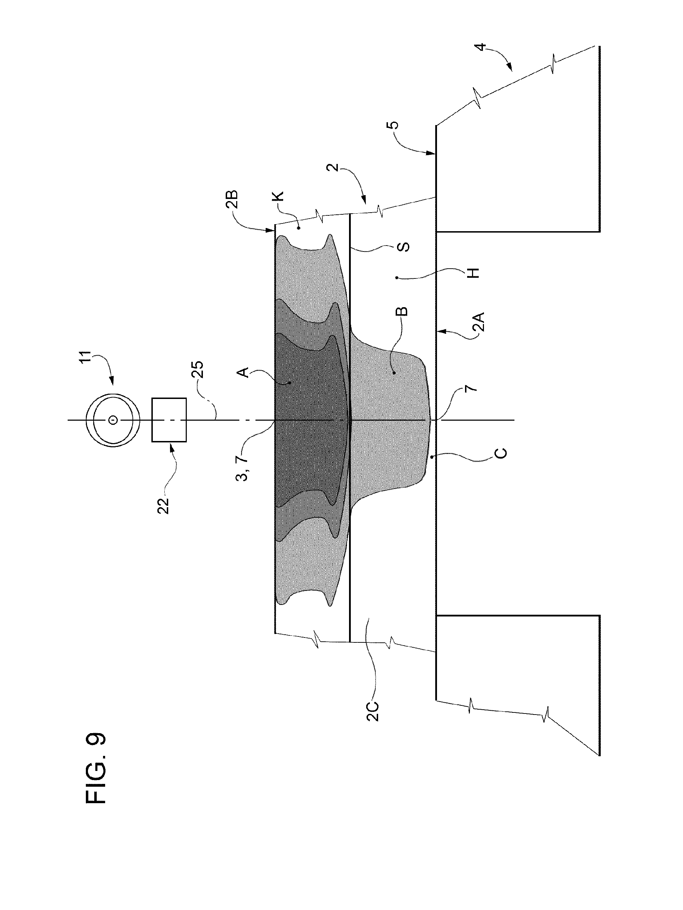

Figure 9 shows the temperature variation in a laminated glass sheet 2 comprising two side glass sheets H and K which are three millimeters thick and an intermediate layer S which is 0.38 millimeters thick using a light bulb 11 having a linear power density of approximately 3 W/mm. As shown in such a figure 9, the temperature assumes a maximum, approximately constant value in a practically rectangular zone A of thickness either equal or very close to the thickness of the glass sheet K facing the light bulb 11. The measured value of such a maximum temperature is equal to approximately 130°C. The temperature then decreases suddenly because a great amount of the heat is absorbed by the intermediate layer S, which heats up promoting the subsequent distancing of the pieces 9,10, to then stabilize on the sheet H at a value of approximately 90°C for the entire thickness of the sheet H itself except for a surface layer C in which a temperature of approximately 60-70°C is measured.

The thermal gradient generated between the surfaces 2A and 2B causes the spontaneous breakage of the sheet 2 along the scoring line 7, and thus along the cutting line 3, in a time varying from 120 to 140 seconds, in the case of the monolithic glass sheet in figure 8, and of 30-50 seconds, in the case of the laminated sheet in figure 9.

The fact that the light bulb 11, and thus the thermal blade, protrude beyond the peripheral surfaces 2C of the sheet 2 to be broken facilitates the triggering or the start of the breakage because the corresponding peripheral zones of the sheet are struck frontally by the output beam 23 and laterally by the portions of the beam 23 itself which, not encountering the sheet 2, brush the peripheral surfaces 2C thus increasing the temperature of the peripheral portions of the sheet 2 with respect to the intermediate portions.

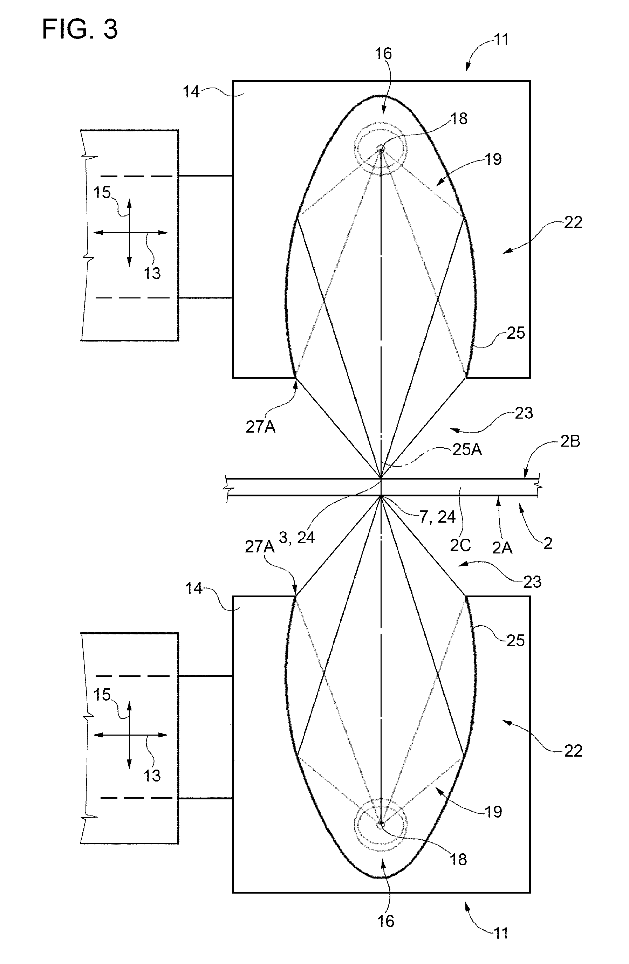

In the variant shown in figure 3, two light bulbs 11 are provided with the respective concentration devices 22 arranged symmetrically on opposite parts of the resting plane 5 and of the sheet 2 to send two opposing output beams 23 onto the sheet 2 itself. The other conditions being equal, the use of a pair of light bulbs 11 allows a considerable reduction of the breakage time with respect to the single light bulb solution. Specifically, by way of example, sending the two opposing beams on the sheet 2 allows to reduce the breakage time by 30%-40% with respect to the case of a single beam 23.

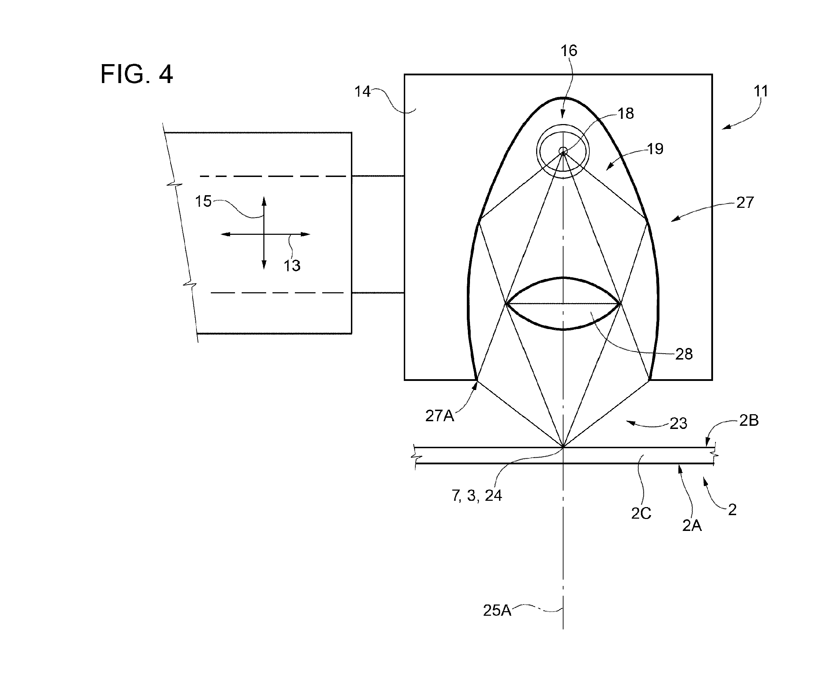

The embodiment shown in figure 4 relates to a focusing device 27, which differs from the focusing device 22 in that it comprises, in addition to the reflecting body 25, at least one focusing lens 28, distinct from the reflecting body 25 and arranged along the plane 25A to deflect a part of the beam 19 coming directly from the filament 18 and/or reflected by the reflecting body 25 and to focus it along the focusing line 24.

According to a variant (not shown), the lens 28 focuses part of the incident beam onto a further focusing line parallel to the line 24 but transversally distanced from the line 24 itself, e.g. intersecting an intermediate point of the sheet 2 either laying on a surface 2A or outside the surface 2A itself.

Conveniently, the lens 28 is a biconvex lens housed within the reflecting body 25 and has a focus arranged on the filament 18 and a focus arranged on the focusing line 24. Alternatively, the lens 28 has at least one convex surface.

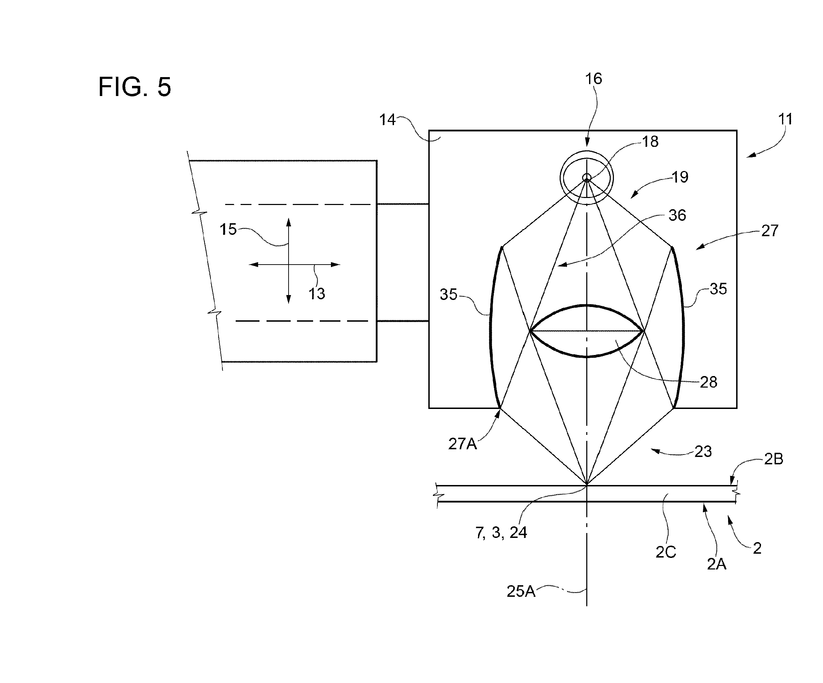

In the variant shown in figure 5, the reflecting body 25 is replaced by a pair of concave reflecting screens 35 arranged on opposite sides of the plane 25A and having respective end edges arranged on the same part as the light bulb 11 or as the filament 18 and distanced from the filament 18 itself.

Conveniently, the screens 35 have respective concavities facing each other and are specular with respect to the plane 25A to deflect a part 36 of the heating beam 19 towards the glass sheet 2 and to focus it in the point 24.

According to a further embodiment (not shown), the lens 28 is replaced by an assembly of lenses adapted to receive the heating rays either coming directly from the filament 18 or reflected by the screens 35, and to focus them on one or more focusing lines arranged in the neighborhood of the focusing line 24.

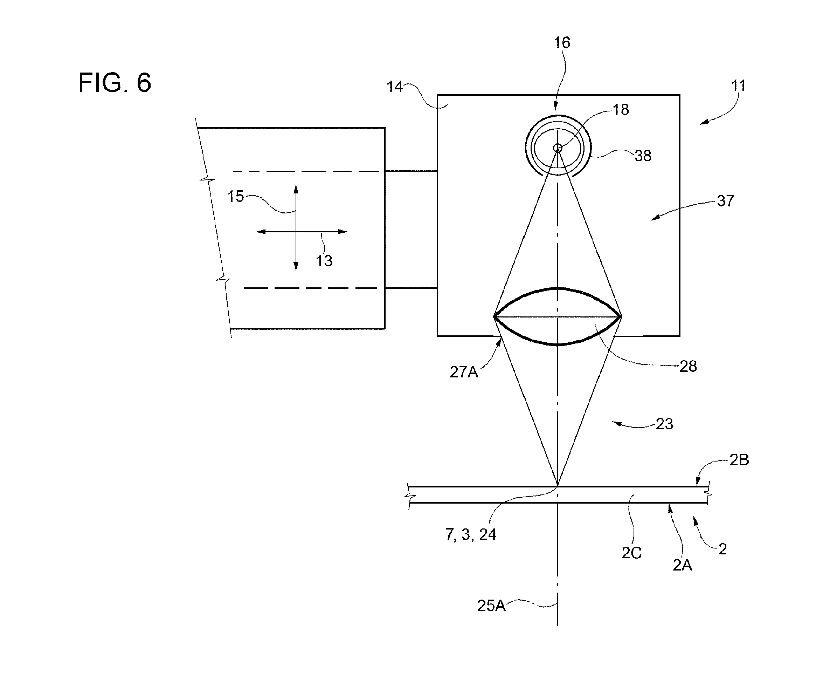

The focusing device shown in figure 6 differs from the device 22 in that it is free from the reflecting body 25 or the screens 35. In such a solution, a part 37 of the heating beam 19 emitted by the source 18 and intersecting the lens 28 is focused on the line 24. Conveniently, the remaining part of the heating beam 19 is reflected by a layer of reflecting material 38 which directly and partially coats the bulb 16.

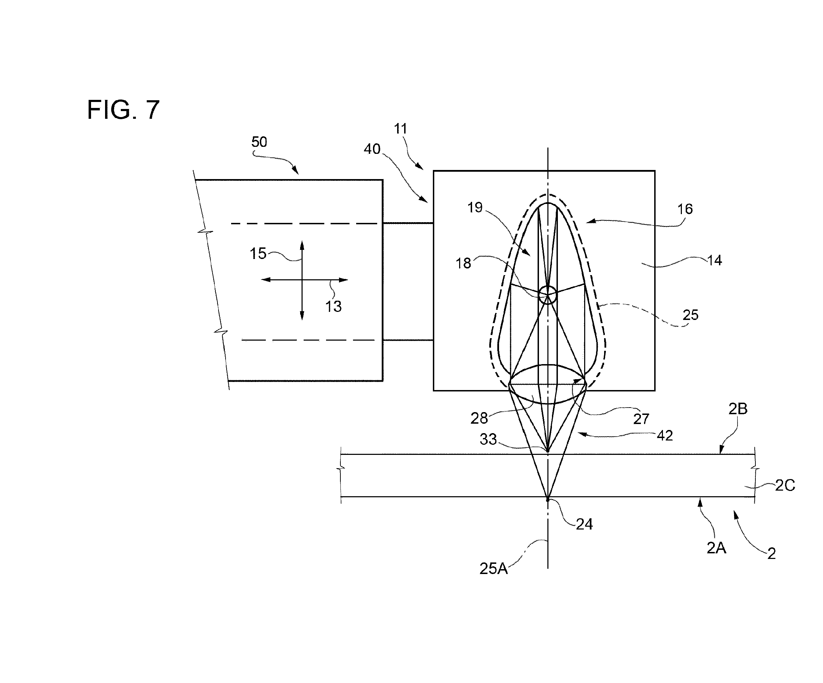

Figure 7 shows a focusing assembly 40, which differs from the focusing assemblies 22 and 27 in that the reflecting body 25 and the lens 28 define part of the bulb 16 of the light bulb 11; in the particular example described, the lens 28 is arranged downstream of the reflecting body 25 in the advancement direction of the heating beam 19 to at least partially close the opening 27A. In such a solution, the reflecting body 25 focuses a part 42 of the heating beam which does not cross the lens 28 along the focusing line 24 which is arranged downstream of the surface 2B, while the remaining part of the heating beam 19 which crosses the lens 28, because it is either directed towards the lens 28 itself or reflected onto the lens 28 by the reflecting body 25, is focused by the lens 28 along the focusing line 33, which, in the particular example described, is upstream of the surface 2A or lays on the surface 2A itself.

Again with reference to figure 1, the machine 1 further comprises two gripping and retaining devices 40 and 41 (known in themselves) adapted to couple with piece 9 and piece 10, respectively. The devices 40 and 41 constitute part of the assembly 8, and each comprises a respective gripping member 42 and 43, for example of the suction cup type, such as in the example shown in figure 1, or alternatively of the gripper type according to a variant (not shown), and respective motorized actuating assemblies 44,45 (also known in themselves and not described in detail) for translating the respective gripping members 42,43 in opposite directions in a direction 47 parallel to the resting plane 5 from and towards the light bulb 11 and/or for displacing the gripping members 42, 43 themselves transversely to the resting plane 5, so as to generate traction/compression actions and/or bending torques on the sheet 2. The gripping members 42 are either individually or both actuated during the heating of the sheet 2 so as to apply continuous or pulsing actions on the sheet 2. Empirically, it has been found that such mechanical stresses allow to reduce the breakage time of the sheet 2, the supplied heat being equal, and/or to reduce the heat needed for breakage in considerable manner, the breakage time being equal. For example, in the case of the laminated glass sheet in figure 9, the time needed to cut the sheet is reduced by approximately 15 seconds with respect to the absence of mechanical stress by firstly applying a traction action of 1 N/mm to break the upper sheet and then a compression action to break the lower sheet.

Empirically, it has been further found that the breakage time and/or the heat needed for breakage may be additionally reduced by providing a concave reflecting body 50 (fig. 1) capable of reflecting the part of the thermal beam 23 which crosses the sheet 2 itself towards the surface 2A of the sheet 2 and towards the cutting line on the part opposite to the resting plane 5 with respect to the light bulb 11.

In the particular example described, the reflecting body 50, which constitutes part of the assembly 8, is actuated by an actuating device 51 (known in itself and not described in detail) adapted to displace the reflecting body 50 itself vertically from and towards the surface 2A and horizontally in a direction parallel 52 to direction 13,47 from and towards an advanced operating position, in which it faces the light bulb 11 faces and the cutting line. Only the upper light bulb 11 is provided in this condition.

Finally, it has been empirically found that the concentration of the thermal beam 19 alone emitted by either one or both the light bulbs 11, and possibly reflected by the reflecting body 50, either with or without mechanical stresses, is sufficient to cause the breakage of the sheet 2 along the provided cutting line 3, also in absence of the scoring line 7.

From the above, it is apparent that concentrating an elongated thermal beam in the direction of extension of the cutting line for forming at least one thermal blade, also elongated in the same direction of extension of the cutting line, for substantially heating in simultaneous manner all the points of the sheet crossing the cutting line allows to obtain the spontaneous breakage of the sheet rapidly and with an end product quality which is comparable to, and in some cases better than, that of the pieces obtained using the traditional breakage methods by bending, also with relatively low power light bulbs, such as filament light bulbs or the described incandescent light bulbs.

In addition to this, again with respect to the known solutions, the breakage occurs in total absence of refrigerating or heating liquids or fluids, because in the sheet 2 the thermal gradient needed for the breakage of the sheet is obtained by means of the simple concentration of a beam emitted by an elongated thermal source. With this regard, it is apparent that the breakage of the sheet 2 may be induced by using light bulbs also with elongated thermal source but different from the described filament light bulb, although the latter is advantageous from the point of view of costs, efficiency and functional reliability.

From the above, it is further apparent that the breakage time of the sheets may vary even considerably according to the variation of the features of the light bulb used and, in particular, of the power of the light bulb itself, of the position of the focusing line or lines, and as a function of whether breakage triggers are present on the sheet or not, which triggers could extend only for a terminal or end stretch of the provided cutting line, for example.

Finally, the fact of focusing the thermal beam on an inclined focusing line with respect to resting plane 5 and, thus, in use, with respect to sheet 2, allows to have gradual but practically instant heating of the sheet along the cutting line and thus to trigger the breakage and make it "run" from one part of the provided cutting line to the other. All the above, by always maintaining the elongated light bulb or bulbs in fixed position with respect to the resting plane and to the sheet during the step of heating and breakage.

From the above, it is apparent that, again, changes and variations may be made both to the machine 1 and to the described concentration modes of the thermal beam without because of this departing from the scope of protection of the independent claims. In particular, different from those indicated by way of example may be the reflecting body 25 and/or the screens 35 or the lenses or assemblies of lenses used for focusing or concentrating the heating beam on focusing lines coinciding or distinct, equal or different from those shown.

Furthermore, from the above, it is apparent that the provided thermal source 11 may comprise several light bulbs 11 with respective device 22 of contained length arranged aligned with respect to each other to form a rectilinear source or be inclined with respect to each other to form a curved source or a broken curve to make a broken focusing line such to approximate a curved cutting line. In such a case, each light bulb 11 and respective concentration device 22 form a respective thermal blade of length equal to the length of the light bulb 11 and such to heat practically in simultaneous manner all points of the underlying stretch of the cutting line. From the above, it is finally apparent that only one of the aforesaid bulbs of shorter length than the width of the sheet to be cut may be sufficient to cause the breakage of the glass sheet also along a cutting line having at least one curved stretch, i.e. for obtaining a so-called "shape cutting".

Empirically, it has been indeed found that the breakage is obtained already with a light bulb longer than 20 millimeters. Empirically, it has been found that very satisfactory results can be obtained with a light bulb of length varying from 50 to 400 millimeters. In all cases, the quality of the cut is optimal with a light bulb approximately 300 millimeters long. It is apparent that the length of the light bulb 11 is determined as a function of the curvature of the curved stretch to be made and, in all cases, so as to avoid the heating of portions of sheet different from the curved stretch so as to avoid pointless heating of portions of sheet not concerned by or distant from the cutting line and to follow the cutting line closely. In other words, the heating of the sheet 2 must be limited to a narrow zone of the sheet 2 and, conveniently, to the zone straddling the curved stretch itself.

In addition to this, it must be possible to displace the light bulb and the sheet with respect to each other in order to follow the cutting line. In the particular example described, it is the light bulb to be oriented at least about a vertical axis to follow the curved stretch. For this purpose, with reference to figure 1, the adjustment device 12 comprises a hinged constraint 60 adapted to allow the rotation of the light bulb 11 and of the respective device 22 about a hinge axis 61 orthogonal to the resting plane 5 and to an actuator 62 for rotating the light bulb 11 and the respective device 22 about such a hinge axis 61. In this manner, the light bulb 11 and the corresponding thermal blade are maintained as much as possible tangent to the curved stretch or intersecting the curved stretch itself so that the focusing line better approximates the curved stretch.

## Claims

1. A machine for cutting a glass sheet; the machine comprising a resting surface and cutting means for breaking said sheet along a predetermined cutting line, **characterized in that** said cutting means comprise at least one heating electric light bulb, comprising at least one rectilinear thermal source elongated along at least one stretch of said cutting line and facing said resting plane for emitting a thermal beam towards the plane and concentration and distribution means of said thermal beam on at least one rectilinear focusing line substantially either tangent or parallel to a tangent to said cutting line for making a thermal blade extending along said stretch for simultaneously heating all the points of said stretch.

2. A machine according to claim 1, **characterized in that** the said light bulb is an incandescent light bulb and that the said thermal source comprises at least one rectilinear filament.

3. A machine according to claim 1 or 2, **characterized in that** said thermal source and said concentration means extend over said resting plane.

4. A machine according to any one of the preceding claims, **characterized in that** it comprises a further thermal source and further concentration means arranged under said resting plane for concentrating a further thermal beam in at least one further focusing line.

5. A machine according to any one of the preceding claims, **characterized in that** it comprises adjustment means of the position of said thermal source and of said concentration means with respect to said resting plane for varying the position of said focusing line with respect to the peripheral surfaces of said glass sheet.

6. A machine according to any one of the preceding claims, **characterized in that** said concentration means comprise reflecting means at least partially surrounding said thermal source for deflecting said thermal beam onto said focusing line.

7. A machine according to any one of the preceding claims, **characterized in that** it comprises reflecting means arranged on the opposite part of said resting plane with respect to said thermal source for reflecting at least part of said thermal beam crossing the sheet towards said thermal source and onto said sheet.

8. A machine according to any one of the preceding claims, **characterized in that** it comprises actuating means for rotating said thermal source and said concentration means about an axis orthogonal to said resting plane.

9. A method for cutting a glass sheet along a predetermined cutting line, the method comprising the steps of arranging the sheet on a resting plane and causing the breakage of said sheet by generating a thermal gradient in the zone of the sheet crossed by said predetermined cutting line, **characterized in that** the generation of said thermal gradient is carried out by using at least one heating electric light bulb comprising at least one elongated, rectilinear thermal source along at least one stretch of said cutting line facing said sheet, emitting a thermal beam towards the zone sheet crossed by said cutting line concentrating and distributing said thermal beam on at least one rectilinear focusing line extending along said stretch in position substantially tangent and parallel to said predetermined cutting line for simultaneously heating all the points of said stretch.

10. A method according to claim 11, **characterized in that** the light bulb used is an electric incandescent light bulb having at least one rectilinear, elongated filament.

11. A method according to claim 9 or 10, **characterized in that** it includes arranging said rectilinear focusing line parallel to an extended surface of said sheet crossed by said cutting line or in inclined position forming an angle different from zero with said extended surface and said resting plane.

12. A method according to any one of the claims from 9 to 11, **characterized in that** the breakage of said sheet occurs without scoring the sheet itself.

13. A method according to any one of the claims from 9 to 12, **characterized in that** it includes sending back onto said glass sheet at least part of said thermal beam crossing the glass sheet.

14. A method according to any one of the claims from 9 to 13, **characterized in that** the breakage of said sheet is carried out by forming a said elongated thermal blade having a length at least equal to the length of said cutting line or by displacing said elongated thermal blade along said cutting line.

15. A method according to any one of the claims from 9 to 14, **characterized in that** the breakage of said sheet is carried out by rotating said thermal source and said concentration means about an axis orthogonal to said resting plane of said sheet.
